# EUROPÄISCHE PATENTSCHRIFT

(11) **EP 3 712 283 B1**
(45) Veröffentlichungstag und Bekanntmachung des Hinweises auf die Patenterteilung: **17.11.2021**
(21) Anmeldenummer: 20164017.4
(22) Anmeldetag: 18.03.2020
(51) Int. Cl.: C22C 19/07, C22C 38/10, C21D 8/12, C22C 30/00, C22F 1/10, H01F 1/147, H01F 1/16

(54) **VERFAHREN ZUM HERSTELLEN EINES BANDS AUS EINER KOBALT-EISEN-LEGIERUNG**
METHOD OF MANUFACTURING A COBALT-IRON ALLOY STRIP
PROCÉDÉ DE FABRICATION D'UNE BANDE D'ALLIAGE FER-COBALT

(30) Priorität: 22.03.2019 DE 102019107422
(43) Veröffentlichungstag der Anmeldung: 23.09.2020
(73) Patentinhaber: Vacuumschmelze GmbH & Co. KG, 63450 Hanau (DE)
(72) Erfinder: VOLBERS, Niklas, 63486 Brüchköbel (DE)
(74) Vertreter: Moore, Joanne Camilla

(56) Entgegenhaltungen:
- WO-A1-2018/091694
- WO-A2-2007/009442
- DE-A1-102012 105 605

## Beschreibung

Die Erfindung betrifft ein Band aus einer Kobalt-Eisen-Legierung, ein Blechpaket und ein Verfahren zum Herstellen eines Bands aus einer Kobalt-Eisen-Legierung.

Weichmagnetische Kobalt-Eisen-Legierungen (CoFe) mit einem Co-Gehalt von 49% werden aufgrund ihrer überragend hohen Sättigungspolarisation verwendet, die weit oberhalb gängiger weichmagnetischer Materialien liegt. Kommerziell verfügbare CoFe-Legierungen weisen typischerweise eine Zusammensetzung von 49 Gew.-% Fe, 49 Gew.-% Co und 2 % V auf, teilweise sind noch Zusätze von Ni, Nb, Zr, Ta oder B enthalten. Bei einer solchen Zusammensetzung wird eine Sättigungspolarisation von etwa 2,3 T erreicht bei gleichzeitig ausreichend hohem elektrischen Widerstand von 0,4 µ.Ohm.m.

Solche Legierungen finden Anwendung z.B. als hochsättigende Flussleitstücke oder aber auch für Anwendungen in elektrischen Maschinen. In der Anwendung als Generator oder Motor werden typischerweise Statoren oder Rotoren in Form von geblechten Paketen hergestellt. Das Material wird dabei typischerweise in Banddicken im Bereich von 2,0 mm bis hin zu sehr dünnen Abmessungen von 0,050 mm eingesetzt.

Das Material wird zur Erzielung der magnetischen Eigenschaften einer Wärmebehandlung unterzogen, die auch als magnetische Schlussglühung oder Schlussglühung bezeichnet wird. Diese Wärmebehandlung findet oberhalb der Rekristallisationstemperatur und unterhalb des Phasenübergangs α/α+γ statt, meist im Bereich von 700°C bis 900°C. Beim anschließenden Abkühlen findet eine Ordnungseinstellung statt, d.h. es bildet sich eine B2-Überstruktur aus. Die Temperatur, bei der die Ordnungseinstellung beim Abkühlen beginnt, ist abhängig von der Zusammensetzung und liegt typischerweise im Bereich von 700°C bis 730°C. Nach der Schlussglühung liegt das Material in einem vorwiegend geordneten Zustand vor und ist in diesem Zustand nur unzureichend stanzbar.

Die Schlussglühung findet je nach Zusammensetzung und gewünschter Kombination aus Festigkeit und magnetischen Eigenschaften bei unterschiedlichen Temperaturen statt. So wird z.B. VACOFLUX 50 (49% Co, 1,9% V, 0,4% Ni, Rest Fe) bei 820°C geglüht, VACOFLUX 48 (49% Co, 1,9% V, Rest Fe) bei 880°C und VACODUR 49 (49% Co, 1,9% V, 0,1% Nb, Rest Fe) bei 880°C oder je nach Anwendungsfall auch bei 750°C.

Durch die magnetische Schlussglühung und die damit verbundene Ordnungseinstellung kommt es zu einer Veränderung der Abmessungen des Blechs. Unter dieser auch als "Längenwachstum" bezeichneten Geometrieänderung wird die bleibende Längenänderung dl verstanden, die auftritt, wenn das Material der Ausgangslänge l₀ einer typischen Schlussglühung unterzogen wird. Im Folgenden wird dabei unter "Längenwachstum" stets das Wachstum dl/lo relativ zur Ausgangslänge l₀ verstanden. Dieses Längenwachstum liegt im Bereich von 0,03 % bis 0,20 %.

Eine Änderung der Abmessungen durch die Schlussglühung ist unerwünscht, da sie sich direkt auf die Maßhaltigkeit einer Einzellamelle bzw. des fertigen Blechpakets auswirkt. In einer Anwendung als Stator oder Rotor kann dies z.B. zu einer Veränderung der Luftspaltgeometrie führen, so dass eine Beeinträchtigung des Magnetkreises die Folge ist.

Die Druckschrift WO2018/091694 offenbart ein Verfahren zum Herstellen einer CoFe-Legierung, bei dem nach dem Zwischenglühen des kaltgewalzten Zwischenbandes im Durchlauf kein Abschrecken und Beizen durchgeführt wird, sodass das wärmebehandelte Zwischenband eine metallisch blanke Oberfläche aufweist. Das wärmebehandelte Zwischenband wird mit dieser metallisch blanken Oberfläche durch ein weiteres Kaltwalzen weiterbearbeitet. Der Kaltverformungsgrad des letzten Kaltwalzenschritts wird begrenzt, was ermöglicht, dass das daraus resultierende Band nach einer magnetische Schlussglühung ein Wachstum dl/lo in Längsrichtung des Bandes weniger als 0,08%, vorzugsweise 0,06% und/oder in Querrichtung des Bandes weniger als 0,08%, vorzugsweise 0,06% aufweist. Dabei bezeichnen l₀ die Ausgangslänge vor Schlussglühung, dl die absolute Längenänderung nach Schlussglühung und dl/l₀ die relative Längenänderung bezogen auf die Ausgangslänge.

Aufgabe ist es daher, ein stanzbares Band aus einer CoFe-Legierung bereitzustellen, das nach der magnetischen Schlussglühung ein deutlich reduziertes Wachstum aufweist und einen geringen Unterschied hinsichtlich des Wachstums in Längs- und Querrichtung aufweist.

Erfindungsgemäß wird ein Verfahren zum Herstellen eines Bandes aus einer CoFe-Legierung bereitgestellt, bei dem eine Bramme bestehend aus 35 Gew.-% ≤ Co ≤ 55 Gew.-%, 0 Gew.-% ≤ V ≤ 3 Gew.-%, 0 Gew.-% ≤ Ni ≤ 2 Gew.-%, 0 Gew.-% ≤ Nb ≤ 0,50 Gew.-%, 0 Gew.-% ≤ Zr + Ta ≤ 1,5 Gew.-%, 0 Gew.-% ≤ Cr ≤ 3 Gew.-%, 0 Gew.-% ≤ Si ≤ 3 Gew.-%, 0 Gew.-% ≤ Al ≤ 1 Gew.-%, 0 Gew.-% ≤ Mn ≤ 1 Gew.-%, 0 Gew.-% ≤ B ≤ 0,25 Gew.-%, 0 Gew.-% ≤ C ≤ 0,1 Gew.-%, Rest Fe sowie bis zu 1 Gew.-% Verunreinigungen zu einem Warmwalzband warmgewalzt und von einer Temperatur oberhalb 700°C auf eine Temperatur kleiner 200 °C abgeschreckt wird. Das Warmwalzband wird zu einem kaltgewalzten Band kaltgewalzt, das kaltgewalzte Band stationär geglüht, um ein Zwischenband zu erzeugen, und das Zwischenband im Durchlauf geglüht. Das stationäre Glühen wird bei einer Maximaltemperatur T₁ durchgeführt, bei der die Ordnung der CoFe-Legierung im kaltgewalzten Band während des stationären Glühens zumindest teilweise aufgelöst und das kaltgewalzte Band zumindest teilweise rekristallisiert wird. Das Glühen im Durchlauf wird bei einer Maximaltemperatur T₂ durchgeführt, die so ausgewählt wird, dass die Ordnung des Zwischenbands zumindest teilweise aufgelöst wird und der Phasenübergang α → α+γ der CoFe-Legierung nicht überschritten wird.

Die Verunreinigungen können eine oder mehrere Elemente aus der Gruppe bestehend aus 0, N, S, P, Ce, Ti, Mg, Be, Cu, Mo und W aufweisen.

Erfindungsgemäß wird somit ein zweistufiger Prozess zum Herstellen eines Bands aus einer CoFe-Legierung bereitgestellt. In der ersten Stufe wird die Aufhebung der Kaltverformung durch eine stationäre Vorglühung geschaffen. In der zweiten Stufe wird die Duktilisierung des Bands durch eine Durchlaufglühung mit schneller Abkühlung geschaffen.

In der stationären Vorglühung werden das Ausheilen von Versetzungen und die beginnende Rekristallisation erstrebt. Dadurch wird der Rekristallisationsgrad eingestellt. In der zweiten Stufe wird eine partielle Unterdrückung der Ordnung erstrebt und somit der Ordnungsgrad eingestellt. Durch die erfindungsgemäßen zwei unterschiedlichen Glühungen wird die Einstellung der beiden Parameter Rekristallisationsgrad und Ordnungsgrad prozesstechnisch voneinander entkoppelt.

Durch das erfindungsgemäße Verfahren wird überraschenderweise das Längenwachstum von der CoFe-Legierung zum Teil vorweggenommen und gleichzeitig ein stanzbares Band bereitgestellt.

Ein derart hergestelltes Band ermöglicht es, durch einen Stanzprozess Blechschnitte herzustellen, diese zur Einstellung einer optimalen Magnetik einer Schlussglühung zu unterziehen und anschließend eine ausreichend hohe Formgenauigkeit zu erhalten. Dadurch können in der Anwendung z.B. als Stator bzw. Rotor geringe Luftspalte eingestellt werden, was zu einer verbesserten Effizienz der elektrischen Maschine führt.

Eine nachträgliche Korrektur der Geometrie, z.B. durch Schleifen, führt typischerweise zu einer Verschlechterung der magnetischen Permeabilität an diesen kritischen Stellen. Außerdem ergibt sich das Risiko von Wirbelströmen, da Schleifprozesse ein Verschmieren der Lamellen zur Folge haben können. Zudem sind solche Prozesse stets mit hohen Kosten verbunden und sind je nach Geometrie auch nicht immer möglich. Durch das erfindungsgemäße Verfahren und das resultierende Band kann auf eine solche aufwendige Nachbearbeitung verzichtet werden.

Ein weiterer Vorteil eines Bands aus einer CoFe-Legierung mit deutlich reduziertem Wachstum ist, dass man ein Stanzwerkzeug so auslegen kann, dass es sowohl für FeSi (Elektrobleche mit 2 bis 4 Gew. % Si) als auch für CoFe verwendbar ist. Bei bisherigem, konventionell hergestelltem CoFe-Band führt die Verwendung des gleichen Werkzeugs zu Problemen, da die eingestellte Geometrie durch das nachträgliche Wachstum bei der Schlussglühung deutlich verändert wird. Durch ein reduziertes Wachstum ist es prinzipiell möglich, ein Werkzeug für beide Materialklassen auszulegen. Dies führt bei den sehr hohen Kosten für ein solches Werkzeug zu einem großen wirtschaftlichen Vorteil.

Ein Vorteil des vorgestellten Verfahrens ist es, dass durch die Trennung der Prozessschritte diese deutlich definierter eingestellt werden können. So sind bei der Durchlaufglühung die Parameter Abkühlrate, Haltedauer bzw. Verweildauer und Durchlaufgeschwindigkeit eng miteinander gekoppelt. Für eine rationelle Fertigung möchte man aus Kostengründen eigentlich eine möglichst hohe Durchlaufgeschwindigkeit einstellen. Während dies positiv für die Abkühlrate ist (die dabei ansteigt), bewirkt es auch eine kürzere Haltedauer des Bands im Ofen, d.h. der Rekristallisationsgrad sinkt. Weiterhin führt eine hohe Durchlaufgeschwindigkeit zu einer Absenkung der maximalen Bandtemperatur. Infolgedessen verändert sich auch der Rekristallisationsgrad des Bands.

Eine Entkopplung der Prozessschritte erlaubt es, zunächst stationär gezielt ein rekristallisiertes Gefüge einzustellen und im Anschluss durch das Durchlaufglühen schnell abzukühlen, um die Duktilität zu gewährleisten.

Zur Einstellung einer hohen Bruchdehnung ist es notwendig, einen möglichst breiten Bereich plastischer Verformbarkeit einzustellen, d.h. eine niedrige Dehngrenze und eine hohe Zugfestigkeit.

Zur Einstellung einer niedrigen Dehngrenze kann prinzipiell die Glühtemperatur erhöht werden, wobei man stets durch das Zweiphasengebiet begrenzt ist, d.h. durch den Übergang α→α+γ. Überschreitet man diese Temperatur, bildet sich eine unmagnetische Phase, die sich beim Abkühlen nicht mehr vollständig umwandelt und zu einer starken Verschlechterung der Weichmagnetik führt. Bei VACODUR 49 z.B. liegt dieser Übergang bei 880°C, bei VACOFLUX 50 hingegen auf Grund des höheren Ni-Gehalts schon bei 820°C.

Bei einer Durchlaufglühung wird auf Grund der kurzen Haltezeit eine deutlich höhere Temperatur gewählt, um das Gefüge gut zu rekristallisieren. Daher ist es nicht beliebig möglich, die 0,2% Dehngrenze Rp_{0.2} abzusenken, ohne das Material nachhaltig in seinen magnetischen Eigenschaften zu schädigen.

Das erfindungsgemäße Verfahren erlaubt es daher, in einem ersten Schritt das Material sicher zu rekristallisieren und eine niedrige Dehngrenze einzustellen. In einem zweiten Schritt wird dann durch die Glühung im Durchlauf die Zugfestigkeit auf Werte von größer als 1000 MPa erhöht. Dabei wird eine möglichst geringe Haltetemperatur oberhalb der Ordnungseinstellung gewählt, z.B. bei 760°C. Durch diese geschickte Kombination lässt sich eine hohe Bruchdehnung auch bei Legierungen einstellen, die auf Grund ihrer Zusammensetzung ein relativ niedriges Zweiphasengebiet aufweisen.

In manchen Ausführungsbeispielen kann die CoFe-Legierung die Klasse 49% Fe 49% Co und 2% V gehören. In einem Ausführungsbeispiel hat die CoFe-Legierung eine Zusammensetzung von 48,65 Gew.-% Co, 1,87 Gew.-% V, 0,10 Gew.-% Nb, 0,17% Ni, 0,03% Mn, 0,02% Si, weniger als 0,0050% C und Rest Fe. Schmelztechnisch bedingt finden sich noch andere Elemente in Gehalten von jeweils höchstens 0,02 Gew.-%. Solch eine Legierung ist mit dem Handelsnamen VACODUR 49 erhältlich. In einem Ausführungsbeispiel wird die stationäre Glühung in einem Haubenofen durchgeführt.

Die Maximaltemperatur, der das Band während des stationären Glühens ausgesetzt wird, ist abhängig von der Zusammensetzung der CoFe-Legierung eingestellt. Das stationäre Glühen wird bei einer Maximaltemperatur T₁ durchgeführt, bei der die Ordnung der CoFe-Legierung im kaltgewalzten Band während des stationären Glühens zumindest teilweise aufgelöst und das kaltgewalzte Band zumindest teilweise rekristallisiert wird.

In manchen Ausführungsbeispielen wird das stationäre Glühen bei einer Maximaltemperatur T₁ durchgeführt, die zwischen dem Phasenübergang α → α+γ der CoFe-Legierung und 650°C liegt. Die Temperatur, bei der der Phasenübergang α → α+γ stattfindet, hängt von der Zusammensetzung der CoFe-Legierung ab, sodass die Obergrenze der Maximaltemperatur T₁ des Glühens im Durchlauf abhängig von der Zusammensetzung der CoFe-Legierung ist. Die Temperatur T₁ kann zwischen 650°C und 900°C, bevorzugt zwischen 680°C und 760°C, liegen. Die Maximaltemperatur T₁ kann über eine Zeitdauer von 30 Minuten bis 10 Stunden gehalten werden.

Nach dem stationären Glühen in der ersten Stufe der Wärmebehandlung wird das Zwischenband typischerweise auf Raumtemperatur abgekühlt. Die Abkühlrate nach dem stationären Glühen kann eingestellt werden. In einem Ausführungsbeispiel wird beim Abkühlen nach dem stationären Glühen im Temperaturbereich von 700°C bis 500°C eine Abkühlrate von mindestens 300 K/h verwendet. Die Abkühlrate beim Abkühlen nach dem stationären Glühen kann beispielsweise unter Verwendung eines Gebläses eingestellt werden.

Das Glühen im Durchlauf wird bei einer Maximaltemperatur T₂ durchgeführt, die so ausgewählt wird, dass die Ordnung des Zwischenbands zumindest teilweise aufgelöst wird und der Phasenübergang α → α+γ der CoFe-Legierung nicht überschritten wird. Da die Temperatur, bei der der Phasenübergang α → α+γ stattfindet, von der Zusammensetzung der CoFe-Legierung abhängt, ist die Obergrenze der Maximaltemperatur T₂ des Glühens im Durchlauf abhängig von der Zusammensetzung der CoFe-Legierung. Die Temperatur T₂ kann zwischen 650°C und 950°C liegen.

Beim Abkühlen nach dem Glühen im Durchlauf wird eine schnelle Abkühlrate verwendet. Beispielsweise wird eine Abkühlrate von mindestens 1 K/s, bevorzugt mindestens 10 K/s im Temperaturbereich von 700°C bis 500°C erreicht. Die Abkühlrate im Temperaturbereich von 700°C bis 500°C ist typischerweise nicht konstant und variiert, sodass die maximale Abkühlrate, die beim Abkühlen des Bands von T₂ auf Raumtemperatur zwischen den Temperaturen 700°C bis 500°C erreicht wird, mindestens 1 K/s, bevorzugt mindestens 10 K/s, ist.

In manchen Ausführungsbeispielen wird das Band bei einer Geschwindigkeit zwischen 2 m/min bis 4 m/min durch einen Durchlaufofen gezogen, um das Zwischenband im Durchlauf zu glühen. Die Verweildauer des Zwischenbandes in der Heizzone des Durchlaufofens mit der Temperatur T₂ kann zwischen 30 Sekunden und 5 Minuten liegen.

Das stationäre Glühen und/oder das Glühen im Durchlauf kann unter einem Inertgas oder einer trockenen wasserstoffhaltigen Atmosphäre durchgeführt werden.

Die Bramme kann so warmegewalzt werden, dass nach dem Warmwalzen das warmgewalzte Band eine Dicke D₁ aufweist, die zwischen 2,0 mm und 3,5mm liegt.

Nach dem Kaltwalzen kann die Dicke des Bands von der Dicke D₁ auf eine Dicke D₂ reduziert werden, wobei D₂ zwischen 0,50 mm und 0,050 mm liegt.

In manchen Ausführungsbeispielen wird das kaltgewalzte Band ferner mit einer elektrisch isolierenden Schicht beschichtet und danach stationär geglüht. Die elektrisch isolierende Schicht kann mittels einer Lösung auf das Band aufgebracht werden. In einem Ausführungsbeispiel kann eine Lösung auf Basis von Mg-Methylat verwendet werden, die danach getrocknet und zersetzt wird, um eine feste anorganische Schicht, beispielsweise eine Oxidschicht, auf dem Bandoberfläche zu bilden. Die Lösung kann beispielsweise durch eine Tauchbeschichtung, Sprühen usw. auf das Band aufgebracht werden. Die elektrisch isolierende Schicht kann eine anorganische Schicht sein, die beispielsweise MgO aufweist.

Nach dem stationären Glühen kann das Band eine Dehngrenze Rp_{0.2} von höchstens 1000 MPa, vorzugsweise weniger als 800 MPa, vorzugsweise weniger al 600 MPa und/oder eine Vickers-Härte HV von höchstens 350, vorzugsweise weniger als 300, aufweisen. Nach dem stationären Glühen kann das Band eine Zugfestigkeit Rₘ von unter 1000 MPa aufweisen.

Nach dem stationären Glühen kann das Band eine Dehngrenze Rp_{0.2} in Längsrichtung von höchstens 1000 MPa, vorzugsweise weniger als 800 MPa, vorzugsweise weniger als 600 MPa und/oder eine Vickers-Härte HV von höchstens 350, vorzugsweise weniger als 300, und/oder eine Zugfestigkeit Rₘ in Längsrichtung von unter 1000 MPa aufweisen. Die Längsrichtung verläuft parallel zu der Walzrichtung.

Nach der anschließenden Durchlaufglühung steigt die Zugfestigkeit des Bands wieder, wobei die Dehngrenze nahezu unverändert bleibt. Beispielsweise steigt die Zugfestigkeit in Längsrichtung auf Werte von über 1000 MPa, wobei die Dehngrenze nahezu unverändert bleibt. Diese mechanischen Eigenschaften ermöglichen, dass das Band stanzbar ist und somit, dass Teile aus dem Band geformt werden können. Diese Teile können die Bleche eines Blechpakets sein, die eine gewünschte Form für das Blechpaket aufweisen, beispielsweise eine E-Form für einen Transformator oder eine runde Form für einen Stator oder Rotor einer rotierenden elektrischen Maschine oder die Form eines gebogenen Kamms für ein Teilsegment einer rotierenden elektrischen Maschine oder die Form eines Kamms für den Stator eines Linearmotors.

In manchen Ausführungsbeispielen weist das Band nach der Glühung im Durchlauf eine Zugfestigkeit in Längsrichtung von größer als 1100 MPa und eine Bruchdehnung in Längsrichtung von größer 17% auf. In Querrichtung weist das Band eine Zugfestigkeit von größer 1000 MPa und eine Bruchdehnung größer 7% auf.

Die Bramme kann aus einer Schmelze bestehend aus 35 Gew.-% ≤ Co ≤ 55 Gew.-%, 0 Gew.-% ≤ V ≤ 3 Gew.-%, 0 Gew.-% ≤ Ni ≤ 2 Gew.-%, 0 Gew.-% ≤ Nb ≤ 0,50 Gew.-%, 0 Gew.-% ≤ Zr + Ta ≤ 1,5 Gew.-%, 0 Gew.-% ≤ Cr ≤ 3 Gew.-%, 0 Gew.-% ≤ Si ≤ 3 Gew.-%, 0 Gew.-% ≤ Al ≤ 1 Gew.-%, 0 Gew.-% ≤ Mn ≤ 1 Gew.-%, 0 Gew.-% ≤ B ≤ 0,25 Gew.-%, 0 Gew.-% ≤ C ≤ 0,1 Gew.-%, Rest Fe sowie bis zu 1 Gew.-% Verunreinigungen herstellt werden. Die Schmelze wird unter Vakuum abgegossen und nach anschließendem Erstarren zu einem Gussblock geformt. Der Gussblock kann dann zu der Bramme warmgewalzt werden.

Die Verunreinigungen in der Schmelze können eine oder mehrere der Gruppe O, N, S, P, Ce, Ti, Mg, Be, Cu, Mo und W aufweisen.

In manchen Ausführungsbeispielen kann die CoFe-Legierung zur Klasse 49% Fe 49% Co und 2% V gehören. In einem Ausführungsbeispiel hat die CoFe-Legierung eine Zusammensetzung von 48,65 Gew.-% Co, 1,87 Gew.-% V, 0,10 Gew.-% Nb, 0,17% Ni, 0,03% Mn, 0,02% Si, weniger als 0,0050% C und Rest Fe. Schmelztechnisch bedingt finden sich noch andere Elemente in Gehalten von jeweils höchstens 0,02 Gew.-%. Solch eine Legierung ist mit dem Handelsnamen VACODUR 49 erhältlich.

In einem weiteren Ausführungsbeispiel wird nach dem Glühen im Durchlauf zumindest ein Blech aus dem Band geformt. Das Blech kann einer Schlussglühung unterzogen werden. Das Blech oder die Bleche könne durch Stanzen oder Erodieren oder Wasserstrahlschneiden oder Laserschneiden geformt werden.

Die Schlussglühung kann stationär und/oder im Durchlauf durchgeführt werden. Die Schlussglühung findet je nach Zusammensetzung und gewünschter Kombination aus Festigkeit und magnetischen Eigenschaften bei unterschiedlichen Temperaturen statt. So wird z.B. VACOFLUX 50 (49% Co, 1,9% V, 0,4% Ni, Rest Fe) bei 820°C geglüht, VACOFLUX 48 (49% Co, 1,9% V, Rest Fe) bei 880°C und VACODUR 49 (49% Co, 1,9% V, 0,1% Nb, Rest Fe) bei 880°C oder je nach Anwendungsfall auch bei 750°C.

In manchen Ausführungsbeispielen wird die Schlussglühung bei 880°C für 6h in einer Wasserstoffatmosphäre mit einem Taupunkt von - 30°C, vorzugsweise -50°C durchgeführt.

In manchen Ausführungsbeispielen beträgt nach der Schlussglühung die Differenz zwischen dem bleibenden Wachstum in Längsrichtung und dem bleibenden Wachstum in Querrichtung des Bands weniger als 0,08%, vorzugsweise weniger als 0,05%. Nach dem Glühen im Durchlauf kann das Band bzw. das Blech in einem Biegewechseltest eine Biegezahl bis zum Bruch von mindestens 20 aufweisen.

Ein Verfahren zum Herstellen eines Blechpakets wird auch bereitgestellt. Mehrere Bleche nach einem der hierin beschriebenen Ausführungsbeispiele werden hergestellt und zu einem Blechpaket gestapelt.

Ein Band aus einer CoFe-Legierung wird bereitgestellt, das eine Zusammensetzung von bestehend aus 35 Gew.-% ≤ Co ≤ 55 Gew.-%, 0 Gew.-% ≤ V ≤ 3 Gew.-%, 0 Gew.-% ≤ Ni ≤ 2 Gew.-%, 0 Gew.-% ≤ Nb ≤ 0,50 Gew.-%, 0 Gew.-% ≤ Zr + Ta ≤ 1,5 Gew.-%, 0 Gew.-% ≤ Cr ≤ 3 Gew.-%, 0 Gew.-% ≤ Si ≤ 3 Gew.-%, 0 Gew.-% ≤ Al ≤ 1 Gew.-%, 0 Gew.-% ≤ Mn ≤ 1 Gew.-%, 0 Gew.-% ≤ B ≤ 0,25 Gew.-%, 0 Gew.-% ≤ C ≤ 0,1 Gew.-%, Rest Fe sowie bis zu 1 Gew.-% Verunreinigungen, eine Banddicke, die maximal 0,50 mm, bevorzugt kleiner als 0,35 mm beträgt, ein bleibendes Längenwachstum nach magnetischer Schlussglühung im Bereich von 730°C bis zum Phasenübergang α→ α+γ von höchstens 0,08%, bevorzugt höchstens 0,05%, eine Bruchdehnung A ≥ 5%, bevorzugt A ≥ 10%, eine Dehngrenze Rp_{0.2} ≤ 1000 MPa, bevorzugt Rp_{0.2} ≤ 800 MPa, und eine Zugfestigkeit Rₘ ≥ 800 MPa, bevorzugt Rₘ ≥ 1000 MPa aufweist.

Die Verunreinigungen können ein oder mehrere Elemente aus der Gruppe bestehend aus O, N, S, P, Ce, Ti, Mg, Be, Cu, Mo und W aufweisen.

In manchen Ausführungsbeispielen kann die CoFe-Legierung in die Klasse 49% Fe 49% Co und 2% V gehören. In einem Ausführungsbeispiel hat die CoFe-Legierung eine Zusammensetzung von 48, 65 Gew.-% Co, 1,87 Gew.-% V, 0,10 Gew.-% Nb, 0,17% Ni, 0,03% Mn, 0,02% Si, weniger als 0,0050% C und Rest Fe. Schmelztechnisch bedingt finden sich noch andere Elemente in Gehalten von jeweils höchstens 0,02 Gew.-%. Solch eine Legierung ist mit dem Handelsnamen VACODUR 49 erhältlich. In einem Ausführungsbeispiel weist Band ferner eine anorganische Beschichtung auf. Die anorganische Beschichtung kann MgO aufweisen

Eine Differenz zwischen dem bleibenden Wachstum in Längsrichtung und dem bleibenden Wachstum in Querrichtung des Bands beträgt in manchen Ausführungsbeispielen weniger als 0,08%, vorzugsweise weniger als 0,05%.

Ein Blechpaket, das mehrere gestapelte Bleche aus einer CoFe-Legierung aufweist, wird auch bereitgestellt. Die CoFe-Legierung hat eine Zusammensetzung bestehend aus 35 Gew.-% ≤ Co ≤ 55 Gew.-%, 0 Gew.-% ≤ V ≤ 3 Gew.-%, 0 Gew.-% ≤ Ni ≤ 2 Gew.-%, 0 Gew.-% ≤ Nb ≤ 0,50 Gew.-%, 0 Gew.-% ≤ Zr + Ta ≤ 1,5 Gew.-%, 0 Gew.-% ≤ Cr ≤ 3 Gew.-%, 0 Gew.-% ≤ Si ≤ 3 Gew.-%, 0 Gew.-% ≤ Al ≤ 1 Gew.-%, 0 Gew.-% ≤ Mn ≤ 1 Gew.-%, 0 Gew.-% ≤ B ≤ 0,25 Gew.-%, 0 Gew.-% ≤ C ≤ 0,1 Gew.-%, Rest Fe sowie bis zu 1 Gew.-% Verunreinigungen, wobei die Verunreinigungen eine oder mehrere der Gruppe O, N, S, P, Ce, Ti, Mg, Be, Cu, Mo und W aufweisen können. Die Bleche weisen eine Blechdicke, die maximal 0,50 mm, bevorzugt kleiner als 0,35 mm, beträgt, ein bleibendes Längenwachstum nach einer Schlussglühung im Bereich von 700°C bis zum Phasenübergang α→ α+γ von höchstens 0,08%, bevorzugt höchstens 0,05%, eine Bruchdehnung A ≥ 5%, bevorzugt A ≥ 10%, eine Dehngrenze Rp_{0.2} ≤ 1000 MPa, bevorzugt Rp_{0.2} ≤ 800 MPa, und eine Zugfestigkeit Rₘ ≥ 800 MPa, bevorzugt Rₘ ≥ 1000 MPa, auf.

In manchen Ausführungsbeispielen weisen die Bleche eine anorganische Beschichtung auf, die beispielsweise MgO aufweisen kann. Eine Differenz zwischen dem bleibenden Wachstum in Längsrichtung und dem bleibenden Wachstum in Querrichtung der Bleche kann weniger als 0,08%, vorzugsweise weniger als 0,05% betragen.

In manchen Ausführungsbeispielen kann die CoFe-Legierung in die Klasse 49% Fe 49% Co und 2% V gehören. In einem Ausführungsbeispiel hat die CoFe-Legierung eine Zusammensetzung von 48,65 Gew.-% Co, 1,87 Gew.-% V, 0,10 Gew.-% Nb, 0,17% Ni, 0,03% Mn, 0,02% Si, weniger als 0,0050% C und Rest Fe. Schmelztechnisch bedingt finden sich noch andere Elemente in Gehalten von jeweils höchstens 0,02 Gew. %. Solch eine Legierung ist mit dem Handelsnamen VACODUR 49 erhältlich. Ausführungsbespiele und Beispiele werden nun anhand der Zeichnungen und Tabellen näher erläutert.
- Figur 1: zeigt eine schematische Darstellung des bleibenden Wachstums durch die gestrichelte Linie für ein kreisförmiges und ein rechteckiges Blech.
- Figur 2: zeigt das gemessene Wachstum längs und quer zur Walzrichtung für einige Beispiele.
- Figur 3: zeigt eine graphische Darstellung der Anzahl der Biegewechsel N.
- Figur 4: zeigt eine graphische Darstellung der Differenz zwischen Rₘ und R_{p0.2}.

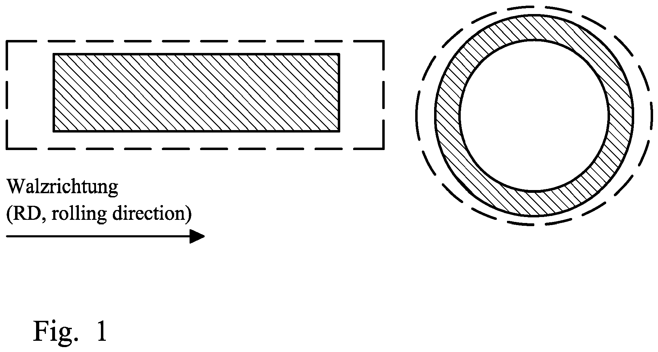

Figur 1 zeigt eine schematische Darstellung eines Blechs aus einer weichmagnetischen CoFe-Legierung, die nach der Schlussglühung ein bleibendes Wachstum zeigt. Das bleibende Wachstum ist in Figur 1 durch die gestrichelte Linie für ein kreisförmiges und ein rechteckiges Blech schematisch dargestellt.

Die weichmagnetische Kobalt-Eisen-Legierung (CoFe) kann eine Zusammensetzung von 49 Gew.-% Fe, 49 Gew.-% Co und 2 % V haben und Zusätze von Ni, Nb, Zr, Ta oder B enthalten. Bei einer solchen Zusammensetzung wird eine Sättigungspolarisation von etwa 2,3 T erreicht bei gleichzeitig ausreichend hohem elektrischen Widerstand von 0,4 µ.Ohm.m.

Die CoFe-Legierung wird zur Erzielung der magnetischen Eigenschaften einer Wärmebehandlung unterzogen, die auch als magnetische Schlussglühung oder Schlussglühung bezeichnet wird. Diese Wärmebehandlung findet oberhalb der Rekristallisationstemperatur und unterhalb des Phasenübergangs α → α+γ statt, meist im Bereich von 700°C bis 900°C. Beim anschließenden Abkühlen findet eine Ordnungseinstellung statt, d.h. es bildet sich eine B2-Überstruktur aus. Die Schlussglühung findet je nach Zusammensetzung und gewünschter Kombination aus Festigkeit und magnetischen Eigenschaften bei unterschiedlichen Temperaturen statt. So wird z.B. VACOFLUX 50 (49% Co, 1,9% V, 0,4% Ni, Rest Fe) bei 820°C geglüht, VACOFLUX 48 (49% Co, 1,9% V, Rest Fe) bei 880°C und VACODUR 49 (49% Co, 1,9% V, 0,1% Nb, Rest Fe) bei 880°C oder je nach Anwendungsfall auch bei 750°C.

Durch die magnetische Schlussglühung und die damit verbundene Ordnungseinstellung kommt es zu einer Veränderung der Abmessungen des Blechs. Unter dieser auch als "Längenwachstum" bezeichneten Geometrieänderung wird die bleibende Längenänderung dl verstanden, die auftritt, wenn das Material der Ausgangslänge l₀ einer typischen Schlussglühung unterzogen wird. Im Folgenden wird dabei unter "Längenwachstum" stets das Wachstum dl/lo relativ zur Ausgangslänge verstanden. Dieses Längenwachstum liegt im Bereich von 0,03 % bis 0,20 %.

Die beschriebene Änderung der Abmessungen durch die Schlussglühung ist unerwünscht, da sie sich direkt auf die Maßhaltigkeit einer Einzellamelle bzw. des fertigen Blechpakets auswirkt. In einer Anwendung als Stator oder Rotor kann dies z.B. zu einer Veränderung der Luftspaltgeometrie führen, sodass eine Beeinträchtigung des Magnetkreises die Folge ist.

Eine rechteckige Probe aus VACOFLUX 50 Band mit einer Banddicke von z.B. 0,35 mm erfährt durch eine Schlussglühung 4h 820°C eine Längenänderung im Bereich von 0,1 % bis 0,2 %. Dabei beobachtet man eine Anisotropie des Wachstums, d.h. in Längsrichtung erfährt das Band ein stärkeres Wachstum als in Querrichtung, wobei die Längsrichtung parallel zu der Walzrichtung des Bands ist.

Eine genauere Betrachtung zeigt, dass diese Anisotropie des Wachstums mit dem Kaltverformungsgrad korreliert. Bei Kaltverformungsgraden > 60% steigt das Wachstum in Längsrichtung signifikant an, während das Wachstum in Querrichtung sich nur sehr gering verändert. Diese Anisotropie des Wachstums stellt insbesondere bei runden Geometrien, wie sie z.B. bei elektrischen Maschinen vorzufinden sind, ein Problem dar, da eine runde Form in eine Ellipse überführt wird, wie in der Figur 1 dargestellt.

In einem Ausführungsbeispiel wird das erfindungsgemäße Band wie folgt hergestellt:
- Warmwalzen einer Bramme aus einer CoFe-Legierung, typischerweise an eine Dicke 2,0mm bis 3,5mm,
- Abschrecken von einer Temperatur oberhalb 700°C,
- Kaltwalzen bis zu einer Enddicke, die beispielsweise 0,50 mm bis 0,050 mm sein kann, zum Bilden eines kaltgewalzten Bands,
- Beschichtung des kaltgewalzten Bands mit einer elektrisch isolierenden Schicht, beispielsweise einer anorganischen Schicht auf Basis von Mg-Methylat,
- stationäre Glühung, beispielweise in einem Haubenofen, gefolgt von
- einer Glühung im Durchlauf.

Eine Schlussglühung zum Einstellen der magnetischen Eigenschaften kann nach der Glühung im Durchlauf und abschließendem Abkühlen auf Raumtemperatur durchgeführt werden.

Gängige Zwischenschritte bei der Bandherstellung wie Kugelstrahlen, Beizen, Schleifen, Besäumen, Streck-Biege-Richten oder das Anbringen von Zugband können an jeder Stelle eingefügt werden.

Die CoFe-Legierung kann zum Beispiel VACODUR 49 mit einer Zusammensetzung von 48,65 Gew.-% Co, 1,87 Gew.-% V, 0,10 Gew.-% Nb, 0,17% Ni, 0,03% Mn, 0,02% Si, weniger als 0,0050% C und Rest Fe sein. Schmelztechnisch bedingt finden sich noch andere Elemente in Gehalten von jeweils höchstens 0,02 Gew.-%. Dieses Ausführungsbeispiel steht stellvertretend für die Klasse der auch als V-Permendur bezeichneten Werkstoffe mit der Grobzusammensetzung 49% Fe 49% Co und 2% V.

Die Beschichtung des kaltgewalzten Bands dient dazu, bei der anschließenden stationären Glühung ein Verschweißen der Bandlagen miteinander zu vermeiden. Als Beschichtungslösung wird eine anorganische Beschichtung auf Basis von Mg-Methylat verwendet, die sich bei einer Wärmebehandlung teilweise in festes Mg-Oxid umwandelt. Auf die Beschichtung vor dem stationären Glühen kann verzichtet werden, wenn das Risiko eines Verschweißens der Bandlagen gering ist. In manchen Ausführungsbeispielen wird das Band zu einem späteren Zeitpunkt beschichtet, um die elektrische Isolation zwischen den gestapelten Blechen des Blechpakets zu bilden.

Die stationäre Glühung kann in einem Haubenofen durchgeführt werden. Diese erste Wärmebehandlung dient dazu, die bisherige Kaltverformung des Bands gezielt aufzuheben, d.h. Auflösen von Versetzungen und beginnende Primärrekristallisation. Die Maximaltemperatur, die das Band aufweist, wird so gewählt, dass die Ordnung zumindest teilweise aufgelöst wird und darf den Phasenübergang α → α+γ nicht überschreiten. Die Haltetemperatur der stationären Glühung liegt daher im Bereich 650°C bis 900°C, bevorzugt bei 680°C bis 760°C und wird danach auf Raumtemperatur abgekühlt.

Im Temperaturbereich von 700°C bis 500°C liegt bei einer stationären Glühung typischerweise eine Abkühlrate zwischen 50 K/h und 200 K/h vor. Dies kann aber je nach verwendetem Ofen und Beladung des Ofens variieren. Generell wird eine schnelle Abkühlung bevorzugt, z.B. durch ein Gebläse, sodass Abkühlraten im o.g. Bereich von mind. 300 K/h erreicht sind.

Diese zweite Glühung im Durchlauf dient dazu, das zumindest teilweise rekristallisierte Band durch eine schnelle Abkühlung zu duktilisieren. Die Maximaltemperatur, die das Band aufweist, wird auch bei diesem Prozess so gewählt, dass die Ordnung zumindest teilweise aufgelöst wird und der Phasenübergang α → α+γ nicht überschritten wird. Der Temperaturbereich liegt damit bei 650°C bis 950°C und kann je nach Zusammensetzung variieren. Bevorzugt wird z.B. bei VACODUR 49 eine Vorgabe von 760°C bei 2 m/min bis 4 m/min, damit keine weitere Rekristallisation des Bands erfolgt. Die Abkühlrate sollte im Bereich von 700°C bis 500°C mind. 1 K/s erreichen, bevorzugt mindestens 10 K/s.

Das so hergestellte Band weist folgende Eigenschaften auf:
- Banddicke maximal 0,50 mm, bevorzugt kleiner 0,35 mm
- Längenwachstum nach magnetischer Schlussglühung im Bereich von 700°C bis zum Phasenübergang α→ α+γ höchstens 0,08%, bevorzugt höchstens 0,05%.
- Vorliegen einer festen anorganischen Beschichtung, z.B. in Form von Mg-Oxid.
- Bruchdehnung A > 5%, bevorzugt A > 10%; 0,2%-Dehngrenze Rp_{0.2} > 1000 MPa

Im Folgenden wird die Erfindung anhand einer Versuchsreihe mit 7 unterschiedlichen Mustern erläutert.

**Tabelle 1**

| # | **Einteilung** | **stationäre Glühung** | **Glühung im Durchlauf** | **Schlussglühung** |
|---|---|---|---|---|
| **1** | Referenz | - | - | 6h 880°C, H₂ |
| **2** | Referenz | 700°C 2h, H₂ | - | 6h 880°C, H₂ |
| **3** | Referenz | 750°C 2h, H₂ | - | 6h 880°C, H₂ |
| **4** | Referenz | - | 820°C 3m/min, H₂ | 6h 880°C, H₂ |
| **5** | Referenz | - | 760°C 3m/min, H₂ | 6h 880°C, H₂ |
| **6** | Erfindung | 700°C 2h, H₂ | 760°C 3m/min, H₂ | 6h 880°C, H₂ |
| **7** | Erfindung | 750°C 2h, H₂ | 760°C 3m/min, H₂ | 6h 880°C, H₂ |

Tabelle 1 zeigt eine Übersicht über die durchgeführten Versuche. Das Ausführungsbeispiel 1 stellt dabei den walzharten Referenzzustand dar. Die Beispiele 2 und 3 sind nur einer stationären Glühung und die Beispiele 4 und 5 nur einer Glühung im Durchlauf unterzogen. Diese Beispiele 2 bis 5 sind somit nicht Teil der vorliegenden Erfindung. Die Beispiele 6 und 7 werden in einem ersten Schritt stationär geglüht und in einem zweiten nachfolgenden Schritt im Durchlauf geglüht. Die Beispiele 6 und 7 sind somit Teil der vorliegenden Erfindung.

Dabei wird ein Band aus VACODUR 49 mit einer Zusammensetzung von 48,65 Gew.-% Co, 1,87 Gew.-% V, 0,10 Gew.-% Nb, 0,17% Ni, 0,03% Mn, 0,02% Si, weniger als 0,0050% C und Rest Fe verwendet. Schmelztechnisch bedingt finden sich noch andere Elemente in Gehalten von jeweils höchstens 0,02 Gew.-%. Dieses Ausführungsbeispiel steht stellvertretend für die Klasse der auch als V-Permendur bezeichneten Werkstoffe mit der Grobzusammensetzung 49% Fe 49% Co und 2% V.

Das Ausführungsbeispiel 1 wurde keiner stationären Glühung und keiner Glühung im Durchlauf unterzogen. Nach der Formgebung durch Stanzen wurden die so erhaltenen Teile einer magnetischen Schlussglühung von 6h 880°C unterzogen. Die Schlussglühung erfolgte dabei unter trockenem Wasserstoff mit einem Taupunkt von -50°C. Diese Schlussglühung wurde in gleicher Weise auch bei den weiteren beschriebenen Varianten 2 bis 7 durchgeführt.

Die Ausführungsbeispiele 2 und 3 wurden vor der magnetischen Schlussglühung hingegen einer stationären Glühung unterzogen. Dabei wurde das Coil mit einem Gewicht von typischerweise 50 kg bis 1000 kg in einem Haubenofen unter trockenem Wasserstoff geglüht. Für die beiden Varianten wurden Temperaturen von 700°C bzw. 750°C bei einer Haltezeit von 2 h gewählt. Im Ausführungsbeispiel 2 führt dies zu einer Ausheilung von Versetzungen, im Beispiel 3 führt dies bereits zu einer deutlichen Rekristallisation. Damit es bei der Glühung nicht zum Verschweißen von Bandlagen kommt, wurden die Bänder vorab mit einer Mg-Methylat-Lösung beschichtet.

Die Ausführungsbeispiele 4 und 5 wurden vor der magnetischen Schlussglühung einer Glühung im Durchlauf unterzogen. Dabei wurde das unbeschichtete Band durch einen vertikalen Turmofen mit einer Heizzone der Länge von 3 m gefahren. Die Bandgeschwindigkeit betrug 3 m/min, d.h. die Haltezeit in der Heizzone betrug 1 Minute. Als Atmosphäre kam trockener Wasserstoff zum Einsatz, wobei der Taupunkt unterhalb von - 30°C lag. Die Abkühlung erfolgte durch das Durchfahren einer wassergekühlten Muffel. Dabei werden Abkühlraten im Band von etwa 5 K/s bis 40 K/s erreicht.

Die Ausführungsbeispiele 6 und 7 stellen die erfindungsgemäßen Zustände dar. Hierbei wurden die stationär geglühten Bänder aus den Ausführungsbeispielen 2 und 3 anschließend im Turmofen im Durchlauf geglüht. Die weiteren Parameter (Bandgeschwindigkeit, Atmosphäre, Abkühlrate) waren analog zu den Beispielen 4 und 5.

In Tabelle 2 sind mechanische Kenndaten aus der Härteprüfung (Vickers-Härte) und aus dem Zugversuch dargestellt. Direkte Kennwerte aus dem Zugversuch sind die 0,2% Dehngrenze (Rp_{0,2}) und die Zugfestigkeit (Rₘ) sowie die Bruchdehnung A. Dabei wurden jeweils Zugproben längs und quer zur Walzrichtung entnommen und geprüft. Als berechneter Kennwert ist noch die Differenz Rₘ - Rp_{0,2} angegeben, die ein Maß für den Bereich plastischer Verformbarkeit darstellt.

**Tabelle 2**

| | | | **Härte** | **Zugversuch längs** | | | | **Zugversuch quer** | | | |
|---|---|---|---|---|---|---|---|---|---|---|---|
| # | **R/E** | **stationär Durchlauf** | **HV** | **Rp_{0.2} MPa** | **Rₘ MPa** | **Rₘ**-**RP_{0.2}** | **A %** | **Rp_{0.2} MPa** | **Rₘ MPa** | **Rₘ**-**RP_{0.2}** | **A %** |
| **1** | R | - | 390 | 1168 | 1298 | 130 | 1,4 | 1257 | 1404 | 147 | 0,7 |
| | | - | | | | | | | | | |
| **2** | R | 700°C 2h | 326 | 727 | 972 | 245 | 7,0 | 844 | 942 | 97 | 4,2 |
| | | - | | | | | | | | | |
| **3** | R | 750°C 2h | 229 | 402 | 577 | 175 | 4,4 | 449 | 535 | 86 | 3,3 |
| | | - | | | | | | | | | |
| 4 | R | - | 261 | 537 | 1155 | 618 | 20,5 | 574 | 975 | 402 | 10,2 |
| | | 820°C 3m/min | | | | | | | | | |
| 5 | R | - | 346 | 880 | 1195 | 315 | 9,3 | 1009 | 1111 | 102 | 3,9 |
| | | 760°C 3m/min | | | | | | | | | |
| 6 | E | 700°C 2h | 324 | 796 | 1363 | 567 | 17,3 | 899 | 1139 | 241 | 7,9 |
| | | 760°C 3m/min | | | | | | | | | |
| 7 | E | 750°C 2h | 251 | 498 | 1164 | 667 | 18,8 | 539 | 1085 | 546 | 12,7 |
| | | 760°C 3m/min | | | | | | | | | |

Tabelle 2 zeigt mechanische Kenndaten aus Härteprüfung und Zugversuch der untersuchten Beispiele 1 bis 7 für die Referenzzustände (R) und erfindungsgemäßen Zustände (E).

Im kaltgewalzten Referenzbeispiel 1 liegt auf Grund der hohen Kaltverformung eine sehr hohe Dehngrenze und Zugfestigkeit vor und die Bruchdehnung liegt mit weniger als 2% sehr niedrig. Die Referenzbeispiele 2 und 3 zeigen, dass durch eine stationäre Glühung allein sowohl die Dehngrenze als auch die Zugfestigkeit deutlich abgesenkt werden. An der nur wenig gesunkenen Härte von Referenzbeispiel 2 von 326 HV erkennt man, dass das Material noch nicht vollständig rekristallisiert ist. Ausführungsbeispiel 3 hingegen ist mit einer Vickers-Härte von 229 deutlich weicher und zeigt auch im Gefügeschliff ein rekristallisiertes Gefüge.

Die Referenzbeispiele 4 und 5 zeigen, dass bei einer Glühung im Durchlauf allein die Dehngrenze ebenfalls stark abgesenkt wird. Dabei zeigt das Referenzbeispiel 4 im Vergleich zu Referenzbeispiel 5 auf Grund der höheren Glühtemperatur von 820°C gegenüber 760°C bei gleicher Durchlaufgeschwindigkeit eine stärkere Absenkung der Dehngrenze. Die Zugfestigkeit in Längsrichtung steigt hingegen auf Werte von größer 1100 MPa, unabhängig von der Wahl der Glühtemperatur. Die Zugfestigkeit in Querrichtung steigt ebenfalls und erreicht Werte von größer 900 MPa. Die Bruchdehnung in Querrichtung ist recht unterschiedlich und erreicht im Fall des Referenzbeispiels 5 nur einen Wert kleiner 4%.

Die erfindungsgemäßen Beispiele 6 und 7 zeigen eine nahezu unveränderte, nur leicht erhöhte Dehngrenze gegenüber den jeweiligen stationär geglühten Referenzbeispiele 2 und 3. Die Zugfestigkeit in Längsrichtung hingegen steigt ähnlich wie bei den nur im Durchlauf geglühten Bändern auf Werte von größer 1100 MPa. Beide Bänder zeigen in Längsrichtung eine sehr hohe Bruchdehnung von über 17%. In Querrichtung ergibt sich ebenfalls ein großer Vorteil. Beide Bänder erreichen Werte für die Zugfestigkeit von größer 1000 MPa und Werte für die Bruchdehnung größer 7%.

Die Erhöhung der Zugfestigkeit bei allen untersuchten Durchlaufglühungen ist auf die damit verbundene schnelle Abkühlung und den damit verbunden resultierende Ordnungsgrad zurückzuführen.

Zur Einstellung einer hohen Bruchdehnung ist es notwendig, einen möglichst breiten Bereich plastischer Verformbarkeit einzustellen, d.h. ein Band mit einer niedrigen Dehngrenze und einer hohen Zugfestigkeit herzustellen.

Zur Einstellung einer niedrigen Dehngrenze kann prinzipiell die Glühtemperatur erhöht werden, wobei man durch das Zweiphasengebiet begrenzt ist, d.h. durch den Übergang α→α + γ. Überschreitet man diese Temperatur, bildet sich eine unmagnetische Phase, die sich beim Abkühlen nicht mehr vollständig umwandelt und zu einer starken Verschlechterung der Weichmagnetik führt. Bei VACODUR 49 z.B. liegt dieser Übergang bei 880°C, bei VACOFLUX 50 hingegen auf Grund des höheren Ni-Gehalts schon bei 820°C.

Bei einer Durchlaufglühung allein wird auf Grund der kurzen Haltezeit eine deutlich höhere Temperatur gewählt, um das Gefüge gut zu rekristallisieren. Daher ist es nicht beliebig möglich, Rp_{0.2} abzusenken, ohne das Material nachhaltig in seinen magnetischen Eigenschaften zu schädigen.

Das erfindungsgemäße Verfahren erlaubt es daher, in einem ersten Schritt das Material sicher zu rekristallisieren und eine niedrige Dehngrenze einzustellen. In einem zweiten Schritt wird dann durch die Glühung im Durchlauf die Zugfestigkeit auf Werte von größer als 1000 MPa erhöht. Dabei wird eine möglichst geringe Haltetemperatur oberhalb der Ordnungseinstellung gewählt, z.B. bei 760°C. Durch diese Kombination lässt sich eine hohe Bruchdehnung auch bei Legierungen einstellen, die auf Grund ihrer Zusammensetzung ein relativ niedriges Zweiphasengebiet aufweisen.

In Tabelle 3 ist das bleibende Längenwachstum dl/lo der Ausführungsbeispiele angeführt. Dazu werden Streifen der Abmessung 160 mm x 20 mm längs und quer zur Walzrichtung geschnitten und deren Ausgangslänge l₀ optisch gemessen. Die Streifen wurden dann der magnetischen Schlussglühung (6h 880, H₂) unterzogen und anschließend erneut gemessen. Aus dem gemessen Wachstum dl wird dann das relative Längenwachstum dl/l₀ berechnet.

Weiterhin ist als Maß für die Anisotropie des Wachstums der Betrag der Differenz der Kennwerte 1 = dl/lo (Wachstum in Längsrichtung) zu q= dl/lo (Wachstum in Querrichtung) berechnet. Diese Größe wird hier als |l-q| bezeichnet.

**Tabelle 3**

| | | | **Wachstum** | | |
|---|---|---|---|---|---|
| **#** | **R/E** | **stationär Durchlauf** | **l = dl/l₀ in % längs** | **q = dl/lo in % quer** | **\|l-q\|** |
| **1** | R | - | 0,138% | 0,092% | 0,046% |
| | | - | | | |
| **2** | R | 700°C 2h | 0,000% | 0,004% | 0,004% |
| | | | | | |
| **3** | R | 750°C 2h | -0,006% | -0,002% | 0,004% |
| | | - | | | |
| **4** | R | - | 0,031% | 0,036% | 0,005% |
| | | 820°C 3m/min | | | |
| **5** | R | - | 0,028% | 0,032% | 0,004% |
| | | 760°C 3m/min | | | |
| **6** | E | 700°C 2h | 0,028% | 0,041% | 0,013% |
| | | 760°C 3m/min | | | |
| **7** | E | 750°C 2h | 0,032% | 0,034% | 0,002% |
| | | 760°C 3m/min | | | |

Tabelle 3 zeigt das bleibende Längenwachstum dl/lo nach zusätzlicher Schlussglühung 6h 880°C für Referenzzustände (R) und erfindungsgemäße Zustände (E).

Das bleibende Längenwachstum des walzharten Referenzbeispiels 1 liegt mit 0,138% in Längsrichtung und 0,092% in Querrichtung im zu erwartenden Bereich für ein 50% CoFe-Material mit deutlicher Kaltverformung von über 80%. Das Wachstum ist so groß, dass eine Berücksichtigung dieses Wachstums durch eine entsprechende Anpassung eines Stanzwerkzeugs praktisch nicht oder nur schwer realisierbar ist. Dies wird insbesondere dadurch erschwert, dass die Anisotropie |l-q| mit 0,046% sehr groß ist.

Das bleibende Längenwachstum des stationären geglühten Materials der Beispiele 2 und 3 ist am geringsten und im Rahmen der Messungenauigkeit nicht mehr vorhanden. Nachteil dieser Zustände ist die unzureichende Stanzbarkeit.

Das bleibende Längenwachstum von rein durchlaufgeglühtem Material der Beispiele 4 und 5 liegt im Bereich von 0,03% bis 0,04% und ist sehr isotrop. Es liegt damit so niedrig, dass es durch eine entsprechende Auslegung eines Stanzwerkzeugs kompensiert werden kann.

Das bleibende Längenwachstum des erfindungsgemäßen Materials der Beispiele 6 und 7 liegt nahezu identisch im Bereich von 0,03% bis 0,04%. Es kann daher davon ausgegangen werden, dass die absolute Größe des Wachstums durch die Abkühlrate im Durchlauf bestimmt wird. In diesen Versuchen lag die Abkühlrate im Bereich 700°C bis 500°C bei 5 K/s bis 40 K/s.

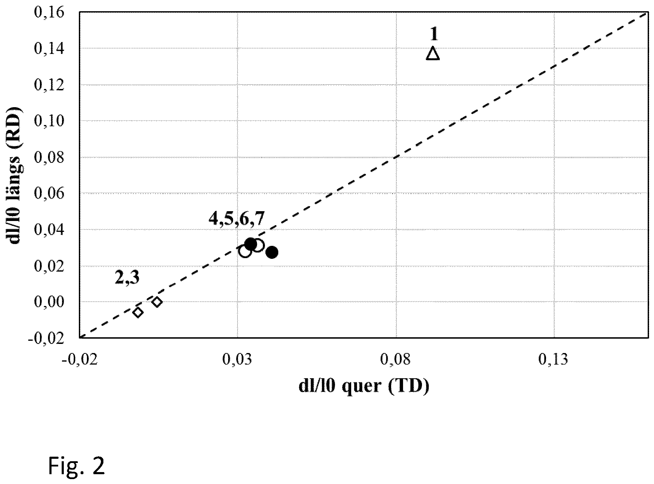

Figur 2 zeigt das gemessene Wachstum längs und quer zur Walzrichtung für die untersuchten Zustände (1-7). Figur 2 zeigt das Längs -und Querwachstum der untersuchten Zustände nach zusätzlicher magnetischer Schlussglühung für 6h bei 880°C.

Die eingezeichnete gestrichelte Linie entspricht einem isotropen Wachstum, d.h. einem identischen Wert für das Längswachstum und das Querwachstum.

Weiterhin wurde noch die Schneid- und Biegbarkeit bewertet, vgl. Tabelle 4.

**Tabelle 4**

| # | **R/ E** | **stationär Durchlauf** | | **N läng s** | **Bewertung längs** | **Schneiden N que r** | **Hin- und Herbiegeversuch Bewertun g quer** |
|---|---|---|---|---|---|---|---|
| **1** | R | - | sehr gut | 66 | + | 9 | - |
| | | - | | | | | |
| **2** | R | 700°C 2h | sehr schlecht | 109 | ++ | 15 | - |
| | | - | | | | | |
| **3** | R | 750°C 2h | schlecht | 1 | - | 7 | - |
| | | - | | | | | |
| **4** | R | - | | | | | |
| | | 820°C 3m/mi n | sehr gut | 70 | + | 68 | + |
| **5** | R | - | | | | | |
| | | 760°C 3m/min | sehr gut | 79 | + | 38 | + |
| **6** | E | 700°C 2h | | | | | |
| | | 760°C 3m/min | sehr gut | 128 | ++ | 31 | + |
| **7** | E | 750°C 2h | | | | | |
| | | 760°C 3m/min | sehr gut | 158 | ++ | 70 | + |

Tabelle 4 zeigt die Schneidbarkeit und Biegbarkeit der untersuchten Zustände.

Die Schneidbarkeit wurde bestimmt, indem das Material mit einer Blechschere längs zur Walzrichtung geschnitten wurde. Eine Beurteilung von "sehr gut" entspricht dabei einer glatten Schnittkante ohne Einrisse oder andere Mängel. Dies entspricht dem walzharten Referenzbeispiel 1.

Durch eine stationäre Glühung verschlechtert sich diese Schneidbarkeit deutlich. Je nach Glühung ergab sich eine sehr schlechte Schneidbarkeit, was sich in diagonal zur Schneidrichtung verlaufenden Rissen beim Referenzbeispiel 2 zeigte, mindestens aber eine schlechte Schneidbarkeit, erkennbar an kleinen Rissen an der Schnittkante des Referenzbeispiels 3.

Die rein durchlaufgeglühten Referenzbeispiele 4 und 5 zeigen eine sehr gute Schneidbarkeit.

Die erfindungsgemäßen Beispiele 6 und 7 zeigen ebenfalls eine sehr gute Schneidbarkeit.

Zusätzlich wurde noch die Biegbarkeit im Hin- und Herbiegeversuch nach DIN EN ISO 7792 bestimmt. Die Biegezahl N wurde wie folgt bestimmt: Ein Streifen der Abmessung 20 mm x 20 mm wurde längs zur Walzrichtung entnommen. Die Biegung erfolgte dann senkrecht zur Entnahmerichtung, sodass für die Biegezahl "längs" der Streifen quer zur Walzrichtung gebogen wurde. Entsprechend wurde für die Biegezahl "quer" der Streifen quer zur Walzrichtung entnommen und längs zur Walzrichtung gebogen.

Die Bewertung der Biegezahl erfolgte gemäß folgender Aufteilung: Weniger als 20 Biegewechsel (N<20) entspricht einer schlechten Biegbarkeit (-), bis zu 99 Biegewechsel (20≤N≤99) entspricht einer guten Biegbarkeit (+) und 100 oder mehr Biegewechsel (N≥100) entspricht einer sehr guten Biegbarkeit (++). Es ist zu beachten, dass die Zahl der Biegewechsel stark abhängig von der verwendeten Banddicke ist. Bei dickerem Material ist generell mit einer geringeren Biegezahl zu rechnen.

Das walzharte Referenzbeispiel 1 zeigt längs eine gute Biegbarkeit (+), quer hingegen eine unzureichende Biegbarkeit (-). Die stationär geglühten Referenzeispiele 2 und 3 zeigen längs sehr unterschiedliche Ergebnisse (++ bzw. -) und quer eine durchgehend schlechte Biegbarkeit (-). Die durchlaufgeglühten Referenzbeispiele 4 und 5 zeigen längs und quer eine durchgehend gute Biegbarkeit (+).

Die erfindungsgemäßen Beispiele 6 und 7 zeigen die mit Abstand beste Biegbarkeit längs (++) und quer ebenfalls eine gute Biegbarkeit (+).

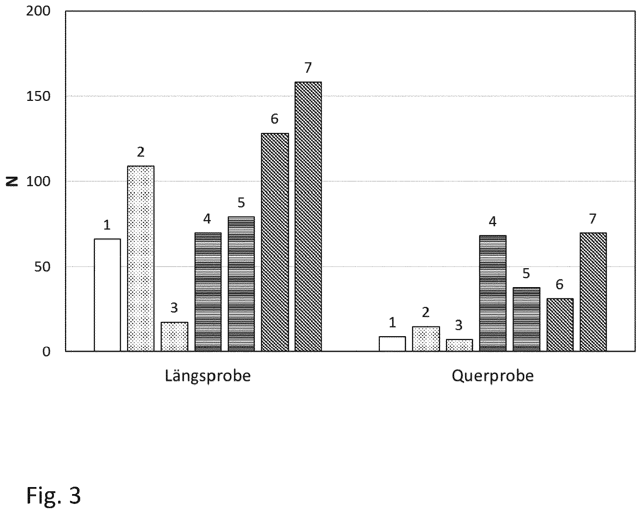

Eine graphische Darstellung der Anzahl der Biegewechsel N findet sich in Figur 3.

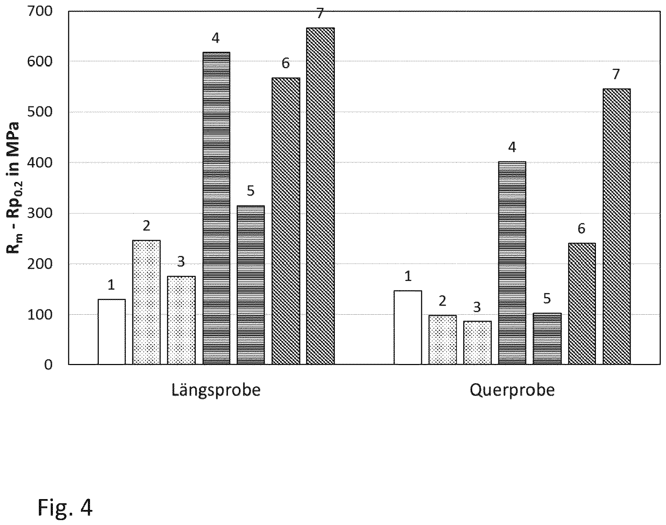

Figur 4 zeigt eine graphische Darstellung des berechneten Differenz Rₘ - Rp_{0,2} der Tabelle 2 angegeben, die ein Maß für den Bereich plastischer Verformbarkeit darstellt.

Zur Einstellung einer hohen Bruchdehnung ist es vorteilhaft, einen möglichst breiten Bereich plastischer Verformbarkeit einzustellen, d.h. ein Band mit einer niedrigen Dehngrenze und einer hohen Zugfestigkeit herzustellen. Durch das Erfindungsgemäßen Verfahren kann eine hohe Zugfestigkeit und niedrige Dehngrenze und somit eine große Differenz erreicht werden.

### Zusammenfassend:

Die stationäre Glühung allein nimmt das Längenwachstum vollständig vorweg. Die Schneidbarkeit und die Biegbarkeit in Querrichtung sind allerdings unzureichend für eine Weiterverarbeitung z.B. zum Stanzen.

Die nur durchlaufgeglühten Beispiele weisen ein geringes und isotropes Restwachstum auf. Die Biegbarkeit ist deutlich verbessert.

Die erfindungsgemäßen erst stationär und anschließend im Durchlauf geglühten Beispiele weisen ebenfalls ein geringes und isotropes Restwachstum auf. Die Biegbarkeit in Längsrichtung ist dabei deutlich besser als bei allen Referenzbeispielen.

Erfindungsgemäß kann durch eine stationäre Glühung in der ersten Stufe die Rekristallisation gezielt gesteuert werden. Infolgedessen kann je nach Rekristallisationsgrad eine Abnahme der Dehngrenze Rp_{0.2} gezielt eingestellt werden. Durch die anschließende Glühung im Durchlauf in der zweiten Stufe bleibt diese nahezu unverändert, während die Zugfestigkeit Rₘ wieder deutlich ansteigt auf Werte von größer 1000 MPa.

Das erfindungsgemäße Verfahren entkoppelt daher die Absenkung der Dehngrenze und die Heraufsetzung der Zugfestigkeit und erlaubt damit eine gezieltere Einstellung einer hohen Bruchdehnung A in einem Band aus einer CoFe-Legierung. Dieses Band kann somit weiterverarbeitet werden, zum Beispiel durch Stanzen, um Teile für ein Blechpaket zu formen, die auch ein geringes bleibendes Längenwachstum nach einer Schlussglühung aufweisen. Somit kann ein Blechpaket für einen Rotor oder Stator mit genauerer Geometrie hergestellt werden.

## Patentansprüche

1. Verfahren zum Herstellen eines Bandes aus einer CoFe-Legierung, aufweisend:
Warmwalzen einer Bramme bestehend aus 35 Gew.-% ≤ Co s 55 Gew.-%, 0 Gew.-% s V ≤ 3 Gew.-%, 0 Gew.-% ≤ Ni s 2 Gew.-%, 0 Gew.-% ≤ Nb s 0,50 Gew.-%, 0 Gew.-% s Zr + Ta s 1,5 Gew.-%, 0 Gew.-% s Cr ≤ 3 Gew.-%, 0 Gew.-% ≤ Si s 3 Gew.-%, 0 Gew.-% ≤ Al ≤ 1 Gew.-%, 0 Gew.-% ≤ Mn ≤ 1 Gew.-%, 0 Gew.-% ≤ B ≤ 0,25 Gew.-%, 0 Gew.-% s C s 0,1 Gew.-%, Rest Fe sowie bis zu 1 Gew.-% Verunreinigungen, wobei die Verunreinigungen eine oder mehrere der Gruppe O, N, S, P, Ce, Ti, Mg, Be, Cu, Mo und W aufweisen können, zu einem Warmwalzband, gefolgt vom Abschrecken des Bandes von einer Temperatur oberhalb 700°C auf eine Temperatur kleiner 200 °C,
Kaltwalzen des Warmwalzbandes zu einem kaltgewalzten Band,
stationäres Glühen des kaltgewalzten Bandes, um ein Zwischenband zu erzeugen,
Glühen des Zwischenbandes im Durchlauf.
wobei das stationäre Glühen bei einer Maximaltemperatur T₁ durchgeführt wird, bei der die Ordnung der CoFe-Legierung im kaltgewalzten Band während des stationären Glühens zumindest teilweise aufgelöst und das kaltgewalzte Band zumindest teilweise rekristallisiert wird,
wobei das Glühen im Durchlauf bei einer Maximaltemperatur T₂ durchgeführt wird, die so ausgewählt wird, dass die Ordnung des Zwischenbandes zumindest teilweise aufgelöst wird und der Phasenübergang α → α+γ der CoFe-Legierung nicht überschritten wird.

2. Verfahren nach Anspruch 1, wobei das stationäre Glühen bei einer Maximaltemperatur T₁ durchgeführt wird, die zwischen dem Phasenübergang α → α+γ der CoFe-Legierung und 650°C liegt.

3. Verfahren nach Anspruch 1 oder Anspruch 2, wobei beim Abkühlen nach dem stationären Glühen im Temperaturbereich von 700°C bis 500°C eine Abkühlrate von mindestens 300 K/h verwendet wird.

4. Verfahren nach einem der Ansprüche 1 bis 3, wobei die Temperatur T₂ zwischen 650°C und 950°C liegt.

5. Verfahren nach einem der Ansprüche 1 bis 4, wobei beim Abkühlen nach dem Glühen im Durchlauf eine Abkühlrate von mindestens 1 K/s, bevorzugt mindestens 10 K/s im Bereich von 700°C bis 500°C erreicht wird.

6. Verfahren nach einem der Ansprüche 1 bis 5, wobei das Band bei einer Geschwindigkeit zwischen 2 m/min bis 4 m/min durch einen Durchlaufofen gezogen wird, um das Zwischenband im Durchlauf zu glühen, wobei die Verweildauer des Zwischenbandes in der Heizzone des Durchlaufofens mit der Temperatur T₂ zwischen 30 Sekunden und 5 Minuten liegt.

7. Verfahren nach einem der Ansprüche 1 bis 6, wobei ferner das kaltgewalzte Band mit einer elektrisch isolierenden Schicht beschichtet wird und danach stationär geglüht wird.

8. Verfahren nach einem der Ansprüche 1 bis 7, wobei ferner eine Schmelze bestehend aus 35 Gew.-% s Co ≤ 55 Gew.-%, 0 Gew.-% s V ≤ 3 Gew.-%, 0 Gew.-% s Ni s 2 Gew.-%, 0 Gew.-% s Nb ≤ 0,50 Gew.-%, 0 Gew.-% s Zr + Ta ≤ 1,5 Gew.-%, 0 Gew.-% ≤ Cr ≤ 3 Gew.-%, 0 Gew.-% ≤ Si s 3 Gew.-%, 0 Gew.-% ≤ Al ≤ 1 Gew.-%, 0 Gew.-% ≤ Mn s 1 Gew.-%, 0 Gew.-% ≤ B ≤ 0,25 Gew.-%, 0 Gew.-% s C ≤ 0,1 Gew.-%, Rest Fe sowie bis zu 1 Gew.-% Verunreinigungen, wobei die Verunreinigungen eine oder mehrere der Gruppe O, N, S, P, Ce, Ti, Mg, Be, Cu, Mo und W aufweisen können, erzeugt und unter Vakuum abgegossen und nach anschließendem Erstarren zu einem Gussblock geformt wird, wobei der Gussblock zu der Bramme warmgewalzt wird.

9. Verfahren nach einem der Ansprüche 1 bis 8, wobei nach dem Glühen im Durchlauf zumindest ein Blech aus dem Band geformt wird.

10. Verfahren nach Anspruch 9, wobei das Blech einer Schlussglühung oberhalb der Rekristallisationstemperatur und unterhalb des Phasenübergangs α → α+γ unterzogen wird.

11. Verfahren nach Anspruch 10, wobei nach der Schlussglühung eine Differenz zwischen dem bleibenden Wachstum in Längsrichtung und dem bleibenden Wachstum in Querrichtung des Bands weniger als 0,08%, vorzugsweise weniger als 0,05% beträgt.

12. Verfahren zum Herstellen eines Blechpakets, aufweisend:
Herstellen mehrerer Bleche nach einem der Ansprüche 9 bis 11,
Stapeln der Bleche zu einem Blechpaket.

## Claims

1. Method for producing a strip from a CoFe alloy, comprising:
the hot-rolling of a slab consisting of 35 % w/w ≤ Co ≤ 55 % w/w, 0 % w/w ≤ V ≤ 3 % w/w, ≤ 3 % w/w, 0 % w/w ≤ Ni ≤ 2 % w/w, 0 % w/w ≤ Nb ≤ 0.50 % w/w, 0 % w/w ≤ Zr + Ta ≤ 1.5 % w/w, 0 % w/w ≤ Cr ≤ 3 % w/w, 0 % w/w ≤ Si ≤ 3 % w/w, 0 % w/w ≤ Al ≤ 1 % w/w, 0 % w/w ≤ Mn ≤ 1 % w/w, 0 % w/w ≤ B ≤ 0.25 % w/w, 0 % w/w ≤ C ≤ 0.1 % w/w, rest Fe and up to 1% w/w impurities, wherein the impurities can comprise one or more of the group of O, N, S, P, Ce, Ti, Mg, Be, Cu, Mo and W, to form a hot-rolled strip, followed by the quenching of the strip from a temperature above 700°C to a temperature of less than 200°C,
the cold-rolling of the hot-rolled strip to form a cold-rolled strip,
the stationary annealing of the cold-rolled strip to produce an intermediate strip,
the annealing of the intermediate strip in a continuous process,
wherein the stationary annealing is carried out at a maximum temperature T₁, at which the order of the CoFe alloy in the cold-rolled strip is at least partially broken up during the stationary annealing process and the cold-rolled strip is at least partially recrystallised,
wherein the annealing in a continuous process is carried out at a maximum temperature T₂, which is chosen such that the order of the intermediate strip is at least partially broken up and the phase transition α ―> α+γ of the CoFe alloy is not exceeded.

2. Method according to claim 1, wherein the stationary annealing is carried out at a maximum temperature T₁ between the phase transition α ―> α+γ of the CoFe alloy and 650°C.

3. Method according to claim 1 or claim 2, wherein a cooling rate of at least 300 K/h is used for cooling after the stationary annealing in the temperature range of 700°C to 500°C.

4. Method according to any of claims 1 to 3, wherein the temperature T₂ lies between 650°C and 950°C.

5. Method according to any of claims 1 to 4, wherein a cooling rate of at least 1 K/s, preferably at least 10 K/s, is reached in the range of 700°C to 500°C is reached when cooling after annealing in a continuous process.

6. Method according to any of claims 1 to 5, wherein the strip is drawn through a continuous furnace at a speed between 2 m/min and 4 m/min in order to anneal the intermediate strip in a continuous process, wherein the dwell time of the intermediate strip in the heating zone of the continuous furnace at the temperature T₂ lies between 30 seconds and 5 minutes.

7. Method according to any of claims 1 to 6, wherein the cold-rolled strip is further coated with an electrically insulating layer, followed by stationary annealing.

8. Method according to any of claims 1 to 7, wherein further a melt consisting of 35 % w/w ≤ Co ≤ 55 % w/w, 0 % w/w ≤ V ≤ 3 % w/w, ≤ 3 % w/w, 0 % w/w ≤ Ni ≤ 2 % w/w, 0 % w/w ≤ Nb ≤ 0.50 % w/w, 0 % w/w ≤ Zr + Ta ≤ 1.5 % w/w, 0 % w/w ≤ Cr ≤ 3 % w/w, 0 % w/w ≤ Si ≤ 3 % w/w, 0 % w/w ≤ Al ≤ 1 % w/w, 0 % w/w ≤ Mn ≤ 1 % w/w, 0 % w/w ≤ B ≤ 0.25 % w/w, 0 % w/w ≤ C ≤ 0.1 % w/w, rest Fe and up to 1% w/w impurities, wherein the impurities can comprise one or more of the group of O, N, S, P, Ce, Ti, Mg, Be, Cu, Mo and W, is produced and decanted under vacuum and formed to produce a cast block following its solidification, wherein the cast block is hot-rolled to form the slab.

9. Method according to any of claims 1 to 8, wherein at least one sheet is formed from the strip after the annealing in a continuous process.

10. Method according to claim 9, wherein the sheet is subjected to a final annealing above recrystallisation temperature and below the phase transition α ―> α+γ.

11. Method according to claim 10, wherein, following the final annealing, a difference between the permanent growth in the longitudinal direction and the permanent growth in the transverse direction is less than 0.08%, preferably less than 0.05%.

12. Method for producing a stack of sheets, comprising:
the production of several sheets according to any of claims 9 to 11,
the stacking of the sheets to form a stack of sheets,

## Revendications

1. Procédé de fabrication d'une bande en alliage de CoFe, consistant à :
laminer à chaud une brame comprenant 35% en poids ≤ Co ≤ 55 % en poids, 0 % en poids ≤ V ≤ 3 % en poids, 0 % en poids ≤ Ni ≤ 2 % en poids, 0 % en poids ≤ Nb ≤ 0, 50 % en poids, 0 % en poids ≤ Zr + Ta ≤ 1, 5 % en poids, 0 % en poids ≤ Cr ≤ 3 % en poids, 0 % en poids ≤ Si ≤ 3 % en poids, 0 % en poids ≤ Al % en poids, 0 % en poids ≤ Mn ≤ 1 % en poids, 0 % en poids ≤ B ≤ 0,25 % en poids, 0 % en poids ≤ C ≤ 0,1 % en poids, le reste étant du Fe ainsi que 1 % en poids maximum d'impuretés, les impuretés pouvant présenter un ou plusieurs éléments du groupe 0, N, S, P, Ce Ti, Mg, Be, Cu, Mo et W, pour une bande de laminage à chaud, suivi par trempage à une température inférieure à 200°C de la bande d'une température supérieure à 700°C,
laminer à froid la bande de laminage à chaud en une bande laminée à froid, procéder au recuit stationnaire de la bande laminée à froid pour produire une bande intermédiaire,
recuire la bande intermédiaire en une passe,
le recuit stationnaire étant effectué à une température maximale Ti, à laquelle l'ordre de l'alliage CoFe est modifié au moins en partie dans la bande laminée à froid pendant le recuit stationnaire et la bande laminée à froid étant au moins en partie recristallisée,
le recuit étant effectué en une passe à une température maximale T₂, qui est sélectionnée de sorte que l'ordre de la bande intermédiaire soit au moins modifiée et que la transition de passage α → α+γ de l'alliage de CoFe ne soit pas dépassé.

2. Procédé selon la revendication 1, dans lequel le recuit stationnaire est effectué à une température maximale T₁ qui se situe entre la transition de passage α → α+γ de l'alliage de CoFe et 650°C.

3. Procédé selon la revendication 1 ou la revendication 2, dans lequel lors du refroidissement après le recuit stationnaire dans une plage de température entre 700°C et 500°C est utilisée une vitesse de refroidissement d'au moins 300 K/h.

4. Procédé selon l'une quelconque des revendications 1 à 3, dans lequel la température T₂ se situe entre 650°C et 950°C.

5. Procédé selon l'une quelconque des revendications 1 à 4, dans lequel lors du refroidissement après le recuit en une passe une vitesse de refroidissement d'au moins 1 K/s, de préférence d'au moins 10 K/s dans la plage comprise entre 700°C et 500°C.

6. Procédé selon l'une quelconque des revendications 1 à 5, dans lequel la bande est étirée à une vitesse comprise entre 2 m/min à 4 m/min dans un four à passage, pour recuire la bande intermédiaire dans un passage, le temps de séjour de la bande intermédiaire dans la zone de chauffage du four à passage dure entre 30 secondes et 5 minutes à la température T₂.

7. Procédé selon l'une quelconque des revendications 1 à 6, dans lequel en outre la bande laminée à froid est revêtue d'une couche diélectrique et est ensuite soumise au recuit stationnaire.

8. Procédé selon l'une quelconque des revendications 1 à 7, dans lequel une masse fondu comprenant en outre 35% en poids ≤ Co ≤ 55 % en poids, 0 % en poids ≤ V ≤ 3 % en poids, 0 % en poids ≤ Ni ≤ 2 % en poids, 0 % en poids ≤ Nb ≤ 0, 50 % en poids, 0 % en poids ≤ Zr + Ta ≤ 1, 5 % en poids, 0 % en poids ≤ Cr ≤ 3 % en poids, 0 % en poids ≤ Si ≤ 3 % en poids, 0 % en poids ≤ Al % en poids, 0 % en poids ≤ Mn ≤ 1 % en poids, 0 % en poids ≤ B ≤ 0,25 % en poids, 0 % en poids ≤ C ≤ 0,1 % en poids, le reste étant du Fe ainsi que 1 % en poids maximum d'impuretés, les impuretés pouvant présenter un ou plusieurs éléments du groupe 0, N, S, P, Ce Ti, Mg, Be, Cu, Mo et W, est produite et versée sous vide et après une solidification consécutive est moulée sous forme de lingot, le lingot étant laminé à chaud sous forme de brame.

9. Procédé selon l'une quelconque des revendications 1 à 8, dans lequel après le recuit dans un passage au moins une tôle est formée à partir de la bande.

10. Procédé selon la revendication 9, dans lequel la tôle est soumise à un recuit final au-dessus de la température de recristallisation et en dessous de la transition de passage α → α+γ.

11. Procédé selon la revendication 10, dans lequel après le recuit final une différence entre la croissance restante dans le sens longitudinal et la croissance restante dans le sens transversal de la bande est inférieure à 0,08 %, de préférence inférieure à 0,05 %.

12. Procédé de fabrication d'un paquet de tôles, consistant à :
fabriquer plusieurs tôles selon l'un des revendications 9 à 11,
empiler les tôles pour former un paquet de tôles.
